## Europäisches Patentamt
## European Patent Office
## Office européen des brevets

(19)

(11) Veröffentlichungsnummer: **0 170 609**
**B1**

## EUROPÄISCHE PATENTSCHRIFT

(12)

(45) Veröffentlichungstag der Patentschrift:
31.08.88

(51) Int. Cl.⁴: **G 01 M 3/00**

(21) Anmeldenummer: **85730026.3**

(22) Anmeldetag: **19.02.85**

(54) Rohrmolch mit Fahrwerken.

(30) Priorität: **24.05.84 DE 3419683**

(43) Veröffentlichungstag der Anmeldung:
**05.02.86 Patentblatt 86/6**

(45) Bekanntmachung des Hinweises auf die Patenterteilung:
**31.08.88 Patentblatt 88/35**

(84) Benannte Vertragsstaaten:
**DE FR GB IT NL**

(56) Entgegenhaltungen:
**EP-A-0 085 504**
**DE-A-3 224 498**
**DE-A-3 229 441**
**GB-A-2 088 554**
**US-A-3 968 568**

(73) Patentinhaber: **MANNESMANN Aktiengesellschaft,
Mannesmannufer 2, D-4000 Düsseldorf 1 (DE)**

(72) Erfinder: **Lehmann, Peter, Dipl.- Ing., Sandheider
Strasse 77, D-4006 Erkrath (DE)**

(74) Vertreter: **Meissner, Peter E., Dipl.- Ing., Meissner
& Meissner Patentanwälte Herbertstrasse 22,
D-1000 Berlin 33 Grunewald (DE)**

## Beschreibung

Die Erfindung betrifft einen Rohrmolch mit mindestens zwei um seine Längsachse gegeneinander versetzt angeordneten Fahrwerken für die axiale Fortbewegung in einer Rohrleitung sowie mit einem Erfassungssystem für die axiale Position des Rohrmolches innerhalb der Rohrleitung.

Beispielsweise sind im Rahmen der Montage oder bei Wiederholungsprüfungen von Kraftwerksrohrleitungen Schweißnahtprüfungen, Sichtkontrollen und andere Inspektionen erforderlich. In der Regel sind diese Rohrleitungen nicht begehbar, so daß nur bei Einsatz eines Molches diese Arbeiten vom Inneren der Rohrleitung her erfolgen können. Schwierigkeiten treten häufig z. B. an solchen Stellen von Rohrleitungen auf, wo Einschweißstutzen vorhanden sind und die Rohrinnenoberfläche dementsprechend ein Loch aufweist oder wo Gegenstände (z. B. Temperaturmeßhülsen) in das Rohr hineinragen. Derartige Unregelmäßigkeiten der Rohrinnenoberfläche stellen ein Hindernis für das Befahren mit einem sich auf Fahrwerken an der Rohrinnenoberfläche abstützenden Rohrmolch dar, da die Fahrwerke z. B. in ein solches Loch eines Einschweißstutzens hineinfallen können und dann ein Weiterfahren des Rohrmolches nicht zulassen. Um diesen Nachteil zu verringern, ist es aus der DE-A-3 224 498 bekannt, einen Rohrmolch mit drei um jeweils 120° gegeneinander versetzten Fahrwerken auszustatten und die einzelnen Fahrwerke mit jeweils zwei Rollenpaaren in Tandemanordnung zu versehen. Dadurch ist es möglich, Einschweißstutzen (z. B. Meßstutzen), deren Durchmesser deutlich kleiner als der Durchmesser der befahrenen Rohrleitung ist, problemlos zu überfahren. Bei größeren Einschweißstutzen kann jedoch ein solcher Rohrmolch ebensowenig eingesetzt werden wie bei Rohrleitungen, bei denen Gegenstände in das Rohrinnere hineinragen.

Aus der GB-A-2 080 554 ist andererseits ein Rohrmolch bekannt, der ein Erfassungssystem für seine axiale Position innerhalb der Rohrleitung aufweist, d. h. dieses System ist in der Lage Richtungsänderungen, also Veränderungen der Lage der Längsachse des Molches im Raum zu erfassen. Auch für diesen Rohrmolch stellen Hindernisse ein Problem dar.

Aufgabe der Erfindung ist es daher, einen Rohrmolch so zu gestalten, daß auch Einschweißstutzen, deren Durchmesser bis zu etwa 80 % des Durchmessers der befahrenen Rohrleitung beträgt, und andere Hindernisse problemlos überfahren werden können.

Gelöst wird diese Aufgabe erfindungsgemäß durch einen Rohrmolch mit den Merkmalen des Patentanspruchs 1; vorteilhafte Weiterbildungen der Erfindung sind in den Unteransprüchen 2 - 7 angegeben.

Der Erfindung liegt der Gedanke zugrunde, den Rohrmolch so auszubilden, daß er sich um seine Längsachse drehen kann, damit er in einer Rohrleitung an beliebiger Stelle in eine gewünschte Winkellage gebracht werden kann. Diese Winkellage richtet sich jeweils nach der Lage des zu überfahrenden Einschweißstutzens oder sonstigen Hindernisses auf der Rohrinnenoberfläche: Der Rohrmolch wird vor dem Überfahren des Hindernisses so gedreht, daß das Hindernis möglichst in der Mitte zwischen zwei benachbarten Fahrwerken liegt und dadurch die Fahwerke an dem Hindernis (z. B. Loch) auf der Rohrinnenoberfläche vorbeifahren.

Anhand der nachfolgenden Figuren soll die Erfindung näher erläutert werden. Es zeigen schematisch:

Fig. 1 einen Rohrmolch mit drei Fahrwerken beim Überfahren eines Einschweißstutzens in unzulässiger Winkelstellung,

Fig. 2 den Rohrmolch gemäß Fig. 1 in zulässiger Winkelstellung,

Fig. 3 einen erfindungsgemäßen Rohrmolch mit Vorrichtung zur Einstellung der Winkelstellung.

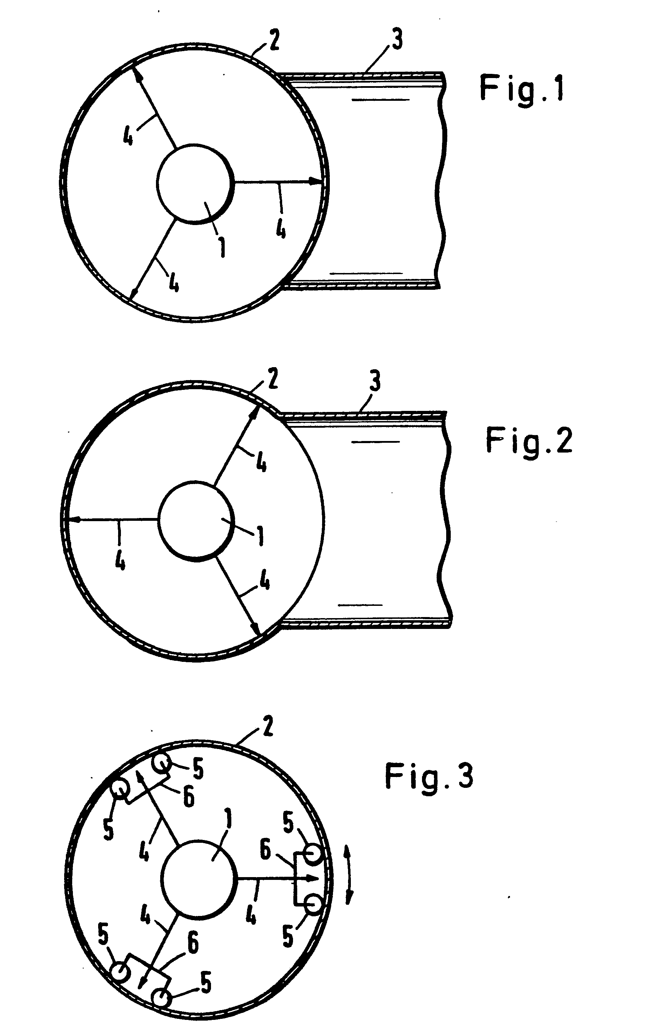

In Fig. 1 ist eine Rohrleitung 2 mit einem Einschweißstutzen 3 im Schnitt dargestellt. Die Rohrleitung 2 wird von einem Rohrmolch 1 befahren, der sich mit drei um 120° gegeneinander versetzten und durch Pfeile schematisch angedeuteten Fahrwerken 4 an der Innenoberfläche des Rohres 2 abstützt. Der Rohrmolch 1 hat bezüglich des Einschweißstutzens 3, an dessen Mündung die Innenoberfläche des Rohres 2 eine entsprechende Öffnung aufweist, eine Winkelstellung, die beim Überfahren des Einschweißstutzens dazu führen würde, daß ein Fahrwerk in die Öffnung hineinfallen und somit die Fahrt des Rohrmolchs 1 behindern würde.

In Fig. 2 ist der Rohrmolch 1 dagegen in einer Winkelstellung, die ein problemloses Überfahren des Einschweißstutzens 3 zuläßt: Der Einschweißstutzen 3 liegt genau zwischen zwei Fahrwerken 4. Der Rohrmolch 1 kann in dieser Position mit seinen drei Fahrwerken 4 ohne Schwierigkeiten Einschweißstutzen 3 Überfahren, deren Durchmesser bis zu etwa 80 % des Durchmessers der befahrenen Rohrleitung 2 betragen kann.

Um ein sicheres Überfahren derartiger Hindernisse zu ermöglichen, ist es erforderlich, den Rohrmolch 1 rechtzeitig in eine geeignete Winkelstellung zum jeweiligen Hindernis zu bringen. Hierzu muß zunächst einmal diese Winkelstellung vor dem Überfahren, also in Abhängigkeit von der Position des Rohrmolchs in axialer Richtung der Rohrleitung 2 erkannt werden können. Dies kann auf verschiedenste Weise realisiert werden, z. B. durch mechanische, optische (z. B. Fernsehkamera, Glasfaserkabel), akustische oder elektronische Abtastvorrichtungen. Mit besonderem Vorteil läßt sich die Winkelstellung auch mit Hilfe eines Kreiselsystems, das im Rohrmolch 1 eingebaut ist, ermitteln. Die Position in axialer Richtung der Rohrleitung 2 kann bei einem gezogenen Rohrmolch 1 leicht über die Länge des noch ausgezogenen Zugseiles ermittelt werden. Sie läßt sich aber auch (z. B. bei Rohrmolchen mit motorischem Antrieb) mit Hilfe eines radioaktiven Positionierstrahlers oder auch mit einem Wegaufnehmer feststellen. Mit Hilfe einer Fernsehkamera am Kopf des Rohrmolchs können die axiale Position und die Winkelstellung gleichzeitig verfolgt werden. Für diese Aufgaben ist eine Vielzahl unterschiedlicher Lösungsmöglichkeiten, wie bereits angedeutet, vorstellbar.

Wird beim Befahren der Rohrleitung 2 ein Einschweißstutzen 3 oder ein entsprechendes Hindernis erkannt, oder ist aufgrund der gemessenen Position des Rohrmolchs 1 und der bekannten Isometrie der Rohrleitung 2 klar, daß sich der Rohrmolch 1 vor einem solchen Hindernis befindet, so wird die erforderliche Winkelstellung des Rohrmolchs 1 gegenüber dem Hindernis durch eine eine Eigenrotation des Rohrmolchs 1 ermöglichende Vorrichtung 6 eingestellt.

Diese Vorrichtung 6 kann z. B. wie in Fig. 3 durch zusätzliche Rollen oder Räder 5 ausgebildet werden, die in die Fahrwerke 4 integriert sind. Die Räder 5 werden z. B. mit Hilfe eines Pneumatzylinders an die Innenoberfläche des Rohres 2 angedrückt, während gleichzeitig die Räder der Fahrwerke 4, die den axialen Vortrieb besorgen, von der Innenoberfläche abgehoben oder zumindest vom Anpreßdruck entlastet werden. Dann werden die Räder 5 solange angetrieben, bis der Rohrmolch 1 die gewünschte Winkelstellung erreicht hat. Schließlich werden die Räder für den axialen Vortrieb wieder angedrückt, während die Räder 5 eingezogen werden, damit der Rohrmolch 1 seine Fahrt fortsetzen kann.

Nach einer anderen Ausbildung der Erfindung können die Fahrwerke 4 für die axiale Fortbewegung des Rohrmolchs 1 und die Fahrwerke 6 mit den Rädern 5 für seine Eigenrotation auch völlig voneinander getrennt sein. Schließlich ist es auch möglich, die Fahrwerke 4 um eine zur Längsachse des Rohrmolchs 1 senkrechte Achse (d. h. um die in den Figuren 1 - 3 eingezeichneten Pfeile) drehbar auszuführen oder aber die Achsen der einzelnen Rollen oder Räder der Fahrwerke 4 entsprechend schwenkbar zu gestalten. In diesem Fall kann die erforderliche Winkelstellung des Rohrmolchs 1 auch bereits während der axialen Vorwärtsbewegung eingestellt werden.

Es reicht aus, wenn ein erfindungsgemäßer Rohrmolch 1 zwei Fahrwerke 4 für die axiale Vorwärtsbewegung aufweist, die in diesem Fall diametral gegenüberliegend angeordnet sein müssen. Mit besonderem Vorteil hinsichtlich einer stabilen Ausrichtung des Rohrmolchs 1 besitzt dieser jedoch drei um 120° versetzte Fahrwerke 4 entsprechend Fig. 3. Eine größere Zahl von Fahrwerken erübrigt sich.

Das Lösungsprinzip der Erfindung ist nicht nur bei Rohrmolchen mit oder ohne Eigenantrieb für die Vorwärtsbewegung, sondern auch bei mehrgliedrigen Rohrmolchen (z. B. Verbindung über Kardangelenke) anwendbar.

Der erfindungsgemäß gestaltete Rohrmolch bringt den großen Vorteil mit sich, daß er die Inspektion oder die Bearbeitung von Rohrleitungen im Rohrinneren gestattet, die nicht begehbar sind und wegen Unregelmäßigkeiten der Innenoberfläche mit herkömmlichen Molchen nicht befahrbar sind. Damit ist eine Beschränkung der Rohrleitungsinspektion auf nur von außen wirkende und daher weniger genaue Prüfmethoden in diesen Fällen nicht mehr gegeben.

**Patentansprüche**

1. Rohrmolch mit mindestens zwei um seine Längsachse gegeneinander versetzt angeordneten Fahrwerken für die axiale Fortbewegung in einer Rohrleitung sowie mit einem Erfassungssystem für die axiale Position des Rohrmolches innerhalb der Rohrleitung
gekennzeichnet durch
ein Erfassungssystem für die Winkelstellung des Rohrmolches (1) hinsichtlich seiner Drehung um seine Längsachse und eine Vorrichtung (5, 6) zur Einstellung dieser Winkelstellung, wobei die Winkelstellung entsprechend der Lage des zu überfahrenden Hindernisses auf der Rohrinnenoberfläche derart eingestellt wird, daß der Rohrmolch vor dem Überfahren des Hindernisses in einer Position vorliegt, daß das Hindernis möglichst in der Mitte zwischen zwei benachbarten Fahrwerken liegt und diese dadurch am Hindernis vorbeifahren.

2. Rohrmolch nach Anspruch 1,
dadurch gekennzeichnet,
daß das Erfassungssystem für die Winkelstellung als Kreiselsystem ausgebildet ist.

3. Rohrmolch nach Anspruch 1 oder 2,
dadurch gekennzeichnet
daß das Erfassungssystem für die axiale Position als radioaktiver Positionierstrahler ausgebildet ist.

4. Rohrmolch nach Anspruch 1,
dadurch gekennzeichnet,
daß zur Erfassung der axialen Position und der Winkelstellung am Rohrmolch (1) mindestens eine Fernsehkamera angeordnet ist.

5. Rohrmolch nach einem der Ansprüche 1 - 4,
dadurch gekennzeichnet,
daß die Fahrwerke (4) für die axiale Fortbewegung des Rohrmolchs (1) um eine zur Längsachse des Rohrmolchs (1) senkrechte Achse drehbar sind.

6. Rohrmolch nach einem der Ansprüche 1 - 4,
dadurch gekennzeichnet,
daß die Achsen der Rollen oder Räder der Fahrwerke (4) schwenkbar ausgeführt sind.

7. Rohrmolch nach einem der Ansprüche 1 - 4,
dadurch gekennzeichnet,

daß die Fahrwerke (4) von der Innenoberfläche des Rohres (2) abhebbar ausgeführt und zusätzliche, an die Innenoberfläche des Rohres (2) anstellbare Fahrwerke (6) für die Rotationsbewegung um die Längsachse des Rohrmolchs (1) angeordnet sind.

8. Rohrmolch nach Anspruch 7,
<u>dadurch gekennzeichnet,</u>
daß die Fahrwerke (6) in die Fahrwerke (4) integriert sind.

## Claims

1. A pipe inspection module for axial movement in a pipe with at least two travelling gear units, arranged about its longitudinal axis and staggered relative to each other, and a system for detecting the axial position of the pipe inspection module inside the pipe, characterised by a system for detecting the angular position of the pipe inspection module (1) with respect to its rotation about its longitudinal axis, and a device (5, 6) for adjusting this angular position, the position being adjustable to correspond to the position of an obstacle to be traversed on the inner surface of the pipe in such a way that the pipe inspection module is in position before traversing the obstacle, that the obstacle is located as closely as possible in the centre between two adjacent travelling gear units, and that the latter thus pass by the obstacle.

2. A pipe inspection module according to Claim 1, characterised in that the detection system for the angular position of the module is designed as a gyroscopic system.

3. A pipe inspection module according to Claim 1 or 2, characterised in that the detection system for the axial position of the module is designed as a radioactive positioning emitter.

4. A pipe inspection module according to Claim 1, characterised in that in order to detect the axial position and the angular position at least one television camera is arranged on the pipe inspection module (1).

5. A pipe inspection module according to one of Claims 1-4, characterised in that the travelling gear units (4) for the axial movement of the module (1) can be rotated about axes to the longitudinal axis of the module (1).

6. A pipe inspection module according to one of Claims 1-4, characterised in that the axes of the rollers or wheels of the travelling gear units (4) are pivotable relative thereto.

7. A pipe inspection module according to one of Claims 1-4, characterised in that the travelling gear units (4) are designed to be withdrawable from the inner surface of the pipe (2) and additional travelling gear units (6) which can be set on the inner surface of the pipe (2) are arranged for the rotational movement about the longitudinal axis of the module (1).

8. A pipe inspection module according to Claim 7, characterised in that the travelling gear units (6) are integrated in the travelling gear (4).

## Revendications

1. Ecouvillon comportant au moins deux moyens de déplacement disposés de façon décalée l'un par rapport à l'autre autour de son axe longitudinal pour son avance axiale dans une conduite, ainsi qu'un système de détection de la position axiale de l'écouvillon à l'intérieur de la conduite,
caractérisé par un système de détection pour la position angulaire de l'écouvillon (1) en vue de sa rotation autour de son axe longitudinal et un dispositif (5, 6) pour régler cette position angulaire, la position angulaire étant réglée de façon correspondante à la position d'un obstacle à dépasser sur la surface interne du tube, de sorte que l'écouvillon, avant de rencontrer l'obstacle, se prouve dans une position telle que l'obstacle se trouve le plus près possible de la position centrale entre deux moyens de déplacement voisins et, ainsi, ceux-ci passent devant l'obstacle.

2. Ecouvillon selon la revendication 1, caractérisé en ce que le système de détection pour la position angulaire est réalisé en tant que système gyroscopique.

3. Ecouvillon selon la revendication 1 ou 2, caractérisé en ce que le système de détection pour la position axiale est réalisé en tant que source de rayonnement radioactif.

4. Ecouvillon selon la revendication 1, caractérisé en ce que, pour détecter la position axiale et la position angulaire, au moins une caméra de télévision est disposée sur l'écouvillon (1).

5. Ecouvillon selon une des revendications 1 à 4,
caractérisé en ce que les moyens de déplacement (4) pour l'avance axiale de l'écouvillon (1) peuvent tourner autour d'un axe perpendiculaire à l'axe longitudinal de l'écouvillon (1).

6. Ecouvillon selon une des revendications 1 à 4,
caractérisé en ce que les axes des galets ou roues des moyens de déplacement (4) sont réalisés pivotants.

7. Ecouvillon selon une des revendications 1 à 4,
caractérisé en ce que les moyens de déplacement (4) peuvent être soulevés de la surface interne du tube (2) et des moyens de déplacement (6) supplémentaires applicables sur la surface interne du tube (2) sont prévus pour la rotation autour de l'axe longitudinal de l'écouvillon (1).

8. Ecouvillon selon la revendication 7, caractérisé en ce que les moyens de déplacement (6) sont intégrés dans les moyens de déplacement (4).

0 170 609

Fig.1

Fig.2

Fig.3